# EUROPÄISCHE PATENTANMELDUNG

(11) **EP 0 595 145 A1**
(43) Veröffentlichungstag der Anmeldung: **04.05.1994**
(21) Anmeldenummer: 93116776.1
(22) Anmeldetag: 18.10.1993
(51) Int. Cl.: B65D 88/60

(54) **Vorrichtung zum Überwachen von Zweikammer-Aufnahmebehälter mit Ausstosskolben für Vakuumsaug- und Druckanlagen**

(30) Priorität: 28.10.1992 DE 9214632 U
(71) Anmelder: MABO FAHRZEUG- UND ANLAGENBAU, ENTSORGUNGS-SYSTEME, UMWELTTECHNOLOGIE GmbH & Co., UTEF FORSCHUNG KG, D-59302 Oelde (DE)
(72) Erfinder: Thüner, Udo Th., D-59302 Oelde (DE)
(74) Vertreter: Strauss, Hans-Jochen, Dipl.-Phys., Dr.

(57) **Zusammenfassung**

Um eine Vorrichtung zum Überwachen von Zweikammer-Aufnahmebehälter mit Ausstoßkolben für Vakuumsaug- und Druckanlagen und mit die Ausstoßbewegung des den Ausstoßkolben stoppenden Stopperpratzen so weiter zu bilden, daß daß mechanische Beanspruchungen, insbesondere Überbeanspruchungen erkennbar werden, wobei in Weiterführung der Aufgabe, die Anzeige derartiger Überbeanspruchungen irreversibel sein soll, wird vorgeschlagen, daß die Wandung des Aufnahmebehälters (1) im Bereich zumindest einer der Stopperpratzen (6) ein Überwachungsstreifen (10) vorgesehen ist, der auf mechanische Überlastung anspricht.

## Beschreibung

Die Erfindung betrifft eine Vorrichtung zum Überwachen von Zweikammer-Aufnahmebehälter mit Ausstoßkolben für Vakuumsaug- und Druckanlagen und mit die Ausstoßbewegung des den Ausstoßkolben stoppenden Stopperpratzen.

Aufnahmebehälter werden vorteilhaft in der Entsorgungstechnik eingesetzt, wobei für das Entleeren des zu entsorgenden Materials unterschiedliche Möglichkeiten benutzt werden. So kann etwa der Aufnahmebehälter von vorn herein geneigt aufgestellt oder auf ein Fahrgestell aufgesetzt und an dem rückwärtigen Ende mit einem öffenbaren Boden verschlossen sein. Hier laufen fließfähige Güter, wie Stäube, Schlämme oder Flüssigkeit von selbst aus, so daß es an sich keiner weiteren Maßnahme bedarf. Vorteilhaft ist es, wenn der Aufnahmebehälter zusätzlich noch gekippt werden kann, so daß die vergrößerte Neigung das Leerlaufen begünstigt. Bei sehr zähflüssigen Materialien beansprucht die Entleerung solcher Aufnahmebehälter erheblich Zeit. Darüber hinaus kann bei einigen Materialien, insbesondere bei solchen, die als Suspension anfallen, während des Lagerns bzw. des Transportes in einem derartigen Aufnahmebehälter eine Sedimentation einsetzen, so daß sich ein kompakter "Bodensatz" bildet, der ein solches Ausfließen stört. Um auch hier in wirtschaftlich tragbaren Zeiten solche Aufnahmebehälter entleeren zu können, werden in diesen Ausstoßkolben vorgesehen, so daß Zweikammer-Aufnahmebehälter gebildet werden, bei denen der Ausstoßkolben die als Saugkammer ausgebildete Aufnahmekammer von einer als Druckkammer ausgebildeten, zweiten Kammer trennt. Während die Saugkammer an die Saugseite eines Saug-/Druck-Aggregates angeschlossen ist, das in der Aufnahmekammer einen Unterdruck erzeugt, zum Aufsaugen des aufzunehmenden Materials, ist die Druckkammer mit einem Druckluftausgang eines Kompressors oder des Saug-/Druck-Aggregates verbunden, so daß in ihr bei Bedarf ein Überdruck aufgebaut werden kann. Dieser Überdruck wird benötigt, um mittels des Ausstoßkolbens aufgenommenes Material ausstoßen zu können.

Während des Ausstoßens gewinnt der Ausstoßkolben infolge des Überdruckes Geschwindigkeit und er muß vor der Behältermündung gestoppt werden. Dieses Stoppen ist um so wichtiger, als im Entleerungsbetrieb niemals ausgeschlossen werden kann, daß der Ausstoßkolben "hängen" bleibt, daß sich infolge nachströmender Druckluft ein erhöhter Überdruck aufbaut und der Ausstoßkolben beim Lösen eine erhebliche Übergeschwindigkeit gewinnt, mit der er auf die Stopperpratzen auftrifft und die gesamte kinetische Energie des Ausstoßkolbens auf diese Stopperpratzen übertragen wird. Diese Stopperpratzen, im Regelfall als Stopperbolzen ausgebildet, sind nahe der Mündung der Zweikammer-Aufnahmebehälter vorgesehen und starr mit der Wandung des Aufnahmebehälters verbunden. Beim Stoppen des Ausstoßkolbens nehmen sie die gesamte kinetische Energie des Ausstoßkolbens plötzlich auf und leiten diese als Kraft in die Wandung des Aufnahmebehälters ein, Damit kann die Wandung des Zweikammer-Aufnahmebehälter im Bereich der Stopperpratze über ihre elastischen Grenzen hinaus beansprucht werden. Da ein solcher Zweikammer-Aufnahmebehälter ein Druckbehälter ist, können derartige, über die Elastizitätsgrenze hinausgehende Beanspruchungen die Druckfestigkeit des Zweikammer-Aufnahmebehälter herabsetzen, die nach einer solchen Beanspruchung nicht mehr einsetzbar sind. Da jedoch derartige Überbeanspruchungen im Regelfall auf Bedienungsfehlern beruhen, werden sie von dem mit dem Umgang mit einem Zweikammer-Aufnahmebehälter betrauten Bedienungspersonal nicht mit Sicherheit gemeldet, sondern vielmehr unterdrückt, um persönliche Nachteile auszuschalten.

Daraus stellt sich die der Erfindung zugrunde liegende Aufgabe, nach der eine Vorrichtung zur Überwachung derartiger Zweikammer-Aufnahmebehälter mit Ausstoßkolben für Vakuumsaug- und Druckanlagen und mit die Ausstoßbewegung des den Ausstoßkolben stoppenden Stopperpratzen so ausgebildet werden soll, daß mechanische Beanspruchungen, insbesondere Überbeanspruchungen erkennbar werden, wobei in Weiterführung der Aufgabe, die Anzeige derartiger Überbeanspruchungen irreversibel sein soll.

Diese Aufgabe wird nun nach der Erfindung dadurch gelöst, daß in der Wandung des Aufnahmebehälters im Bereich zumindest einer der Stopperpratzen ein Überwachungsstreifen vorgesehen ist, der auf mechanische Überlastung anspricht. Derartige Überwachungsstreifen sind fest auf der Wandung des Aufnahmebehälters aufgebrachte Streifen, die im wesentlichen parallel zur der Achse des Zweikammer-Aufnahmebehälter verlaufen; diese Richtung ist ausreichend, da die Richtung der Krafteinleitung dieser Richtung entspricht, und in Umfangsrichtung verlaufende Kräfte beim Abbremsen des Ausstoßkolbens nicht zu erwarten sind.

Als Überwachungsstreifen werden etwa Farbstreifen oder sonstige Beschichtungen eingesetzt, wobei die Farbe oder das Beschichtungsmaterial unelastisch ist, so daß die Dehnung, die die Wandung des Aufnahmebehälters infolge der beim Abbremsen des Ausstoßkolbens über die Stopperpratzen übertragenen Kräfte erfährt, zu einem "Aufreißen" der Schicht führt, das irreversibel ist und ein Erkennen der Überbeanspruchung gestattet. Dabei wird diese Überwachung bei der regelmäßigen Inspektion des Zweikammer-Aufnahmebehälters durch den Betreiber vorgenommen, aber auch bei den in regelmäßigen Zeitabständen -etwa jährlichen- Überprüfungen der Zweikammer-Aufnahmebehälter als Druckkessel durch eine Überwachungsbehörde.

Eine andere Möglichkeit besteht in der Anwendung von mechano-elektrischen Wandlern, etwa in Form der bekannten Dehnungsmeßstreifen, die mit einer elektrischen (bzw. elektronischen) Überwachungschaltung, beispielsweise einer Widerstand-Meßbrücke, verbunden sind, wobei der Eingang dieser Schaltung eine Brücke darstellt. Der zweite Brückenzweig kann dabei mit einem analogen Dehnungsmeßstreifen verbunden sein, der außerhalb der Wirkungsbereichs der überwachten Stopperpratze angeordnet ist. So können Spannungen, die etwa durch Temperaturdehnungen bedingt sind, von vorn herein kompensiert werden.

Vorteilhaft wird zum Ausschließen von Manipulationen der Überwachungsstreifen mittels einer Klappe abgedeckt. Dadurch wird ein Zuriff zum Überwachungstreifen wirksam verhindet. Die Klappe ist dabei mittels eines vorzugsweise als Bügelschloß ausgebildeten Schlosses verschließbar abdeckbar, so daß der Überwachungsstreifen erst dann zugänglich ist, wenn der Berechtigte mit dem Schlüssel das Schloß geöffnet hat. Um das Bügelschloß auf der Klappe festzulegen, ist ein Klemmbügel vorgesehen, mit dem das Schloß auf der Klappe festlegbar ist; ein untergelegter Dichtring schützt dabei das Schloß z.B. vor Feuchtigkeit und verhindert ein Klappern.

Die elektrische Überwachungsschaltung weist vorteilhafter Weise einen Verstärker mit Differenzeingang auf, dessen Ausgang mit mindestens einem Speicher in Verbindung steht, zum Ablegen beim Überschreiten ermittelter Werte. Mit dieser Anordnung kann die Anzahl der Anschläge registriert werden. Dabei wird dem Verstärker ein Filter nachgeschaltet, das zumindest einen Tiefpaß aufweist, so daß als von Dauerdehnungen bedingte Gleichspannungsanteile erfaßbar sind. Diese Dauerdehnung sind auf Überschreitungen der Elastizitätsgrenze zurückzuführen; sie stellen die kritische Größe dar. Vorteilhaft werden die der Dauerdehnung entsprechendenden Gleichspannungsanteile in einem Integrationsglied aufsummiert, die von dem Integrationsglied (IG) abrufbar sind. In Weiterbildung weist das Filter zusätzlich zum Tiefpaß einen Hochpaß auf, dessen Ausgang einem Schwellwert-Diskriminator mit unterer Ansprechschwelle zugeführt wird, so daß lediglich die diese Grenze überschreitenden Werte gespeichert werden und abrufbar sind. Hiermit wird die Zahl der Anschläge registriert, bei denen eine Kraft freigesetzt wird, die größer ist als die der Ansprechschwelle über deren Spannungswert zugeordnete Kraft. Vorteilhaft ist die Überwachungschaltung mit einem Zeitgeber versehen, wodurch neben dem Wert der Überschreitung auch deren Datum und Zeit festhaltbar sind.

Vorteilhaft ist dabei, den Ausgang der Überwachungschaltung mit einem Mikroprozessor oder einem Rechner zu verbinden, der unmittelbar die durch die Abbremsung bedingte Krafteinleitung in die Wandung des Aufnahmebehälters bestimmt und ihre Größe hinsichtlich der zulässigen Elastizitätsgrenze bewertet. Zumindest die Überschreitungen werden dann in einem rechnereigenen Speicher abgelegt, wobei zusätzlich Datum und Uhrzeit gespeichert werden können. Das Auslesen erfolgt mit einem zweiten Rechner oder mit einer geeigneten Einrichtung, so daß eine Manipulation der Daten unmöglich gemacht wird, wobei das Auslesen über eine Ausgangsschnittstelle der Überwachungsschaltung erfolgt.

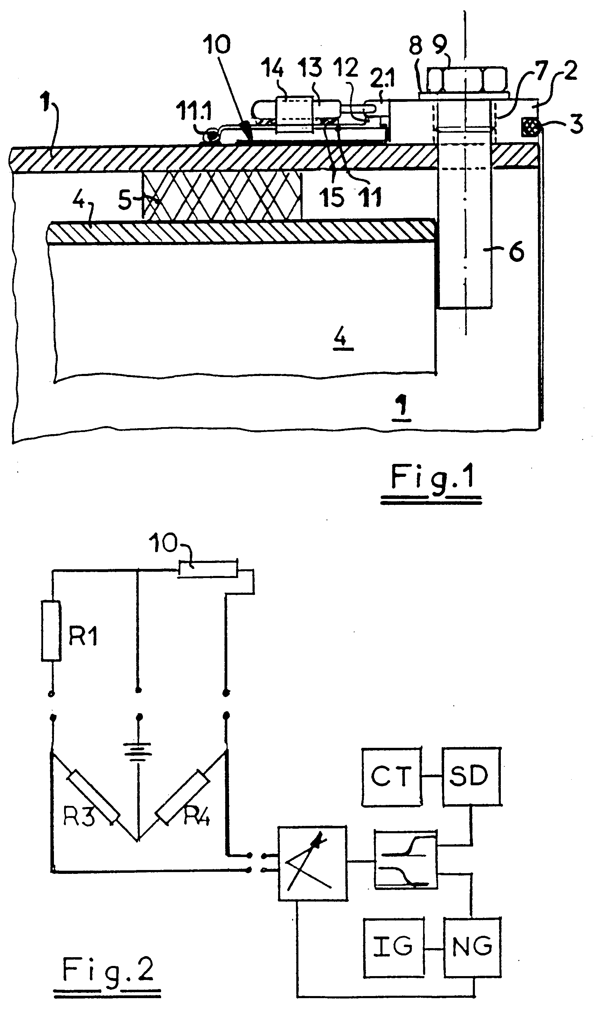

Das Wesen der Erfindung wird an Hand der Figuren 1 und 2 beispielhaft näher erläutert; dabei zeigen
- Fig. 01:: Einen Schnitt durch die Wandung des Aufnahmebehälters im Bereich einer Stopperpratze;
- Fig. 02:: Ein Schaltungsschema einer Überwachung mit Dehnungsmeßstreifen.

Die Figur 1 zeigt einen typischen Schnitt durch den Flanschrand eines öffenbaren Aufnahmebehälters 1, dessen Verschlußdeckel -hier nicht näher dargestellt- mit seinem umlaufenden Flansch gegen den Endflansch 2 des Aufnahmebehälter 1 angepreßt werden kann, wobei die Dichtung 3 für die notwendige Abdichtung sorgt. In dem Aufnahmebehälter 1 befindet sich ein längs verschiebbarer Ausstoßkolben 4, der gegenüber der Innenseite der Wand des Aufnahmebehälters 1 mit Führungen 5 abgestützt ist, und der den Aufnahmebehälter 1 in einen der öffenbaren Seite mit dem umlaufenden Flansch 2 zugewandten Aufnahmeraum für zu entsorgende Güter und einen Druckraum unterteilt. Durch einen von einem Druck-/Saug-Aggregat erzeugten Überdruck kann der Ausstoßkolben 4 zum Entleeren des Aufnahmebehälter 1 zur geöffneten Seite des Aufnahmebehälter 1 hin verschoben werden, und entsprechend nach dem Entleeren durch einen Unterdruck in Ruhestellung gebracht werden. Der Endanschlag des Ausstoßkolbens wird von mehreren über den Umfang verteilten Anschläge gebildet, von denen hier einer als Bolzen 6 dargestellt ist, der in den Endflansch 2 mittels des schraubenartig ausgebildeten Oberteils 7 mit Gewinde und Schraubenkopf, wobei eine Unterlegscheibe 6 als Schraubensicherung vorgesehen ist, eingeschraubt ist. Dadurch ist eine einfache Auswechselbarkeit gegeben, was bei Deformationen infolge des Anschlagens des Ausstoßkolbens 4 zweckmäßig ist.

Bei diesen Anschlägen prallt der Ausstoßkolben 4 gegen die Stopperpratze, die als Stopper-Bolzen 6 ausgebildet ist, dabei wird eine Kraft freigesetzt, die über den Bolzen 6 in die Wandung des Aufnahmebehälters 1 eingeleitet wird, wobei der Kraftfluß zum einen über den Formschluß zwischen dem Bolzenschaft und dem Loch in der Wandung des Aufnahmebehälters 1 und zum andern über die Verschraubung des Bolzen 6 im Flanschring 2 verläuft. Infolge dieser Kraft wird die Wandung des Aufnahmebehälter 1 in einem sich an den Flanschring 2 anschließenden Bereich beansprucht, wobei diese Beanspruchung die Elastizitätsgrenze überschreiten kann. Wird die Elastizitätsgrenze überschritten, kommt es zu einer bleibenden Verformung der Behälterwandung, die die Sicherheit des Aufnahmebehälter 1 als Druckbehälter beeinträchtigt. Um dieses zu überwachen ist ein Überwachungsstreifen 10 im kritischen Bereich vorgesehen, der als Dehnungsmeßstreifen ausgebildet an eine Meßbrücke (Fig. 2) angeschlossener Dehnungsmeßstreifen zum einen die Impulsbelastung bei Beanspruchungen unterhalb der Elastizitätsgrenze aufnimmt, zum anderen aber auch dauernde Verformungen infolge der damit verbundenen andauernden Gleichgewichtsverschiebung der Meßbrücke zu registrieren erlaubt. Hier kommt es zunächst auf bleibende Verformungen an, so daß jeder andere Überwachungsstreifen, der bei bleibenden Verformungen etwa reißt und so einen Indikator für eine eingetretene Dauerverformung bildet, in gleicher Weise eingesetzt werden kann. Hierunter sind auch solche zu verstehen, bei denen erst mit einem Folgetest entstandene Risse sichtbar gemacht werden können, etwa mittels Absprühens mit einer färbenden Flüssigkeit, Abwischen und Auftragen eines saugfähigen, andersfarbigen Belags.

Um hier Manipulationen vorzubeugen, wird der Überwachungsstreifen mittels eine an die Behälterwand mit einem Scharnier 11.1 klappbar angeschlagenen Klappe 11 abgedeckt, wobei diese Klappe 11 mit einer Öse 12 versehen mit Ösen 2.1 des Flanschring 2 zusammenwirkend in diesen mittels eines Bügelschlosses 13 festgelegt werden kann. Das Bügelschloß 13 selbst wird dabei zweckmäßig mit der Schlüsselöffnung nach unten auf einem Dichtungsring 15 aufgelegt und mittels eines federnden Klemmbügels 14 gesichert.

Vorteilhaft ist die Anwendung elektrischer Dehnungsmeßstreifen als Überwachungsstreifen 10. Diese werden, wie in Figur 2 dargestellt, in eine Meßbrücke eingeschaltet, die aus den Widerständen R1 sowie R2 und R3 gebildet ist. Die Meßbrücke wird in einer der beiden Brükkendiagonalen mit einer Spannung versorgt (durch eine Batterie angedeutet), die in der anderen Diagonalen anfallende Meßspannung, die durch Abgleich des Widerstands R1 auf den Widerstandswert des Dehnungsmeßstreifens und durch Abgleich der Widerstände R3 und R4 auf den Wert Null gebracht werden kann, wird einem Differenz-Verstärker zugeführt, dem ein Tiefpaß und ein Hochpaß nachgeschaltet sind. Der Hochpaß erlaubt eine getrennte Aussage über Dehnungen, wobei der Dehnungsimpuls als Kurzzeitimpuls den Hochpaß passiert und vom Tiefpaß gesperrt wird; ein nachgeschalteter Schwellwert-Diskriminator SD erlaubt eine Bewertung der Größe der umgesetzten Kraft, so daß Stöße oberhalb eines vorgegebenen Grenzwertes einem Zähler CT zugeleitet und dort registriert werden. Dauer-Verformungen führen zu einem Auswandern des Nullpunktes, der von einem dem Tiefpaßausgang nachgeschalteten Nullwertglied bewertet und von dem Integrationsglied aufsummiert wird. Der im Integrationsglied gespeicherte Wert gibt die Gesamtdehnungan, die vom davor liegenden Abgleich eingetreten ist. Um die Bewertung unabhängig von Dauerdehnungen zu halten, wird der die Diagonalspannung der Brücke aufnehmende Verstärker als Regelverstärker ausgebildet, wobei eine vom Tiefpaß registrierte Dauerabweichung vom Nullwert als Korrekturwert auf den Regeleingang des Verstärkers zurückgeführt wird, und dessen Differenzen-Eingang so beeinflußt, daß unabhängig vom Dehnungszustand des Dehnungsmeßstreifens der Ausgang des Verstärkers in Ruhe immer auf Null zurückgeregelt ist. Die vom Nullwertglied abgegebene Stellgröße entspricht dabei dem Wert der Dauerdehnung und ist so Basiswert für das Integrationsglied.

## Patentansprüche

1. Vorrichtung zum Überwachen von Zweikammer-Aufnahmebehälter mit Ausstoßkolben für Vakuumsaug- und Druckanlagen und mit die Ausstoßbiegung des den Ausstoßkolben stoppenden Stopperpratzen, **dadurch gekennzeichnet,** daß die Wandung des Aufnahmebehälters (1) im Bereich zumindest einer der Stopperpratzen (6) ein Überwachungsstreifen (10) vorgesehen ist, der auf mechanische Überlastung anspricht.

2. Vorrichtung nach Anspruch 1, **dadurch gekennzeichnet,** daß der Überwachungsstreifen (10) als Anzeigestreifen ausgebildet ist, der ein Übersschreiten der Elastizitätsgrenze irreversibel anzeigt.

3. Vorrichtung nach Anspruch 1, **dadurch gekennzeichnet,** daß der Überwachungsstreifen (10) als mechano-elektrischer Wandler ausgebildet ist, der mit einer elektrischen Überwachungsschaltung verbunden ist, die ihrerseits die mechanischen Veränderungen beim Anschlagen des Ausstoßkolben (4) an die Stopperpratze (6) registriert.

4. Vorrichtung nach einem der Ansprüche 1 bis 3, **dadurch** **gekennzeichnet,** daß der Überwachungsstreifen (10) mittels einer Klappe 11 abdeckbar ist.

5. Vorrichtung nach Anspruch 4, **dadurch gekennzeichnet,** daß die Klappe mittels eines vorzugsweise als Bügelschloß (13) ausgebildeten Schlosses verschließbar abdeckbar ist.

6. Vorrichtung nach nach Anspruch 5, **dadurch gekennzeichnet,** daß das Bügelschloß (13) mittels eines Klemmbügels (14) auf der Klappe festlegbar ist, vorzugsweise auf einem Dichtungsring (15).

7. Vorrichtung nach einem der Ansprüche 3 bis 6, **dadurch gekennzeichnet,** daß der Überwachungsstreifen (10) ein Dehnungsmeßstreifen ist, und daß die Überwachungschaltung einen Brückeneingang aufweist.

8. Vorrichtung nach Anspruch 7, **dadurch gekennzeichnet,** daß die elektrische Überwachungsschaltung einen Verstärker mit Differenzeingang aufweist, dessen Ausgang mit mindestens einem Speicher (CT; IG) in Verbindung steht, zum Ablegen beim Überschreiten ermittelter Werte.

9. Vorrichtung nach Anspruche 8, **dadurch gekennzeichnet,** daß dem Verstärker ein Filter nachgeschaltet ist, das zumindest einen Tiefpaß aufweist, so daß als von Dauerdehnungen bedingte Gleichspannungsanteile erfaßbar sind.

10. Vorrichtung nach Anspruch 9, **dadurch gekennzeichnet,** daß die der Dauerdehnung entsprechendenden Gleichspannungsanteile in einem Integrationsglied (IG) aufsummiert und von dem Integrationsglied (IG) abrufbar sind.

11. Vorrichtung nach Anspruch 8 oder 9, **dadurch gekennzeichnet,** daß das Filter zusätzlich zum Tiefpaß einen Hochpaß aufweist, dessen Ausgang einem Schwellwert-Diskriminator (SD) mit unterer Ansprechschwelle zugeführt wird, so daß lediglich die diese Grenze überschreitenden Werte gespeichert werden und abrufbar sind.

12. Vorrichtung nach einem der Ansprüche 7 bis 11, **dadurch gekennzeichnet,** daß die Überwachungschaltung mit einem Zeitgeber versehen ist, wodurch neben dem Wert der Überschreitung auch deren Datum und Zeit festhaltbar sind.

13. Vorrichtung insbesondere nach Anspruch 12, **dadurch gekennzeichnet,** daß das die Überwachungsschaltung mit einem Mikroprozessor versehen ist, der mit einem Arbeitspeicher und einem Ablagespeicher zusammenwirkt.

14. Vorrichtung nach einem der Ansprüche 10 bis 13, **dadurch gekennzeichnet,** daß die Überwachungssschaltung eine Ausgangsschnittstelle aufweist, zum Abrufen und Auslesen der gespeicherten Werte.
